# EUROPEAN PATENT SPECIFICATION

(11) **EP 2 510 225 B1**
(45) Date of publication and mention of the grant of the patent: **13.11.2013**
(21) Application number: 10795458.8
(22) Date of filing: 06.12.2010
(51) Int. Cl.: F03B 11/00, F03B 13/22

(54) **WAVE ENERGY CONVERSION**
WELLENENERGIEUMWANDLUNG
CONVERSION DE L'ÉNERGIE DES VAGUES

(30) Priority: 07.12.2009 US 282035 P
(43) Date of publication of application: 17.10.2012
(73) Proprietor: Jospa Limited, Blackrock, Country Dublin (IE)
(72) Inventor: DUFFY, Patrick Joseph, Blackrock County Dublin (IE); FITZSIMONS, Jocelyn Raymond, George's Quay Cork (IE)
(74) Representative: Weldon, Michael James
(86) International application number: PCT/IE2010/000069
(87) International publication number: WO 2011/070559

(56) References cited:
- WO-A1-2007/015269
- WO-A1-2008/091208
- RU-C1- 2 004 837
- US-A1- 2007 048 086

## Description

### INTRODUCTION

### Field of the Invention

The invention relates to wave energy conversion, and more particularly to inlet of water and air into a wave energy converter.

### Prior Art Discussion

WO2007/015269 describes a wave energy converter ("WEC") having tubes into which water enters at one end. This is referred to in this specification as a tubular WEC. Another such WEC is described in WO2006/067421. Wave motion causes water and air intake and the tube is flexible enough to generally conform to the sea surface so that the water is pumped to move along the tubes. Our patent application number PCT/IE2009/000049 (WO2010/007607) also described a tubular WEC. Another prior art WEC is disclosed in US2007/0048086A.

A major objective is to achieve a sufficient velocity at the intake so that there is sufficient momentum for the slugs to travel along the tube, propelled by the wave motion on the tube as it floats on the sea There are major practical problems involved in achieving such consistent intake into a tubular WEC, particularly in view of the wide variety of weather conditions experienced at offshore locations with good wave energy.

The invention addresses this problem.

### SUMMARY OF THE INVENTION

According to the invention, there is provided a n air and water intake for a wave energy converter, the intake comprising:
a substantially rigid hollow body having a mouth for receiving water from the upper parts of the waves and air, and an outlet for delivering the water and air to a wave energy converter; and
buoyancy means providing buoyancy to the body and being adapted to cause the intake to:
   receive into the mouth skimmed-off water from near the top of a wave, and
   tilt so that said water flows downwardly within the body, gaining velocity; and and wherein the intake comprises a connector on an underside of the body for connection to an anchor at a location for pitching of the intake body about a pitching axis,
wherein the pitching axis and a lateral centre of buoyancy axis are arranged such that water primarily from the top of a wave and slightly forwardly of a wave crest is received, and
wherein the buoyancy is arranged such that said centre of buoyancy axis of the intake is forwardly of the pitching axis.

In one embodiment, the distance between the centre of buoyancy axis and the pitching axis is in the range of 1% to 4% of the length of the body lower wall, the centre of buoyancy axis being forward of the pitching axis.

In one embodiment, said distance is preferably about 2.5% of said length.

In one embodiment, the connector is arranged such that the angle during operation in calm seas is between the connector and a lower wall of the body is in the range of 25° to 30°.

In one embodiment, the pitching axis is located at a distance in the range of 35% to 45% of the length of a lower wall of the body from a leading edge of said lower wall. In one embodiment, said distance is approximately 38% of said length.

In one embodiment, the body is connected to the buoyancy by a resilient coupling.

In one embodiment, the intake comprises an adjustment mechanism to adjust mutual height of the body and the buoyancy.

In one embodiment, the connector comprises a frame for connection to an anchor.

In one embodiment, the frame is connected to the body about a transverse pivot joint to prevent rotation about a longitudinal axis.

In one embodiment, the frame is substantially A-shaped, having means at its apex for connection to an anchor.

In one embodiment, the buoyancy comprises a pair of transverse buoys.

In one embodiment, the intake comprises stabilising buoyancy at the front and adapted to restrict excessive pitching.

In one embodiment, the intake comprises stabilising buoyancy at the rear and adapted to follow the water surface and maintain the tube at approximately water level in operation.

In one embodiment, the mouth is defined by top and bottom walls, the bottom wall being adapted to cut through a wave top.

In one embodiment, the walls are substantially planar near the mouth.

In one embodiment, the bottom wall leading edge is recessed back with respect to leading edge of the top wall.

In one embodiment, the intake further comprises a flap hinged about a horizontal axis from a top wall of the body, and arranged to prevent blowback of pressured air in the body.

In one embodiment, the intake further comprises one or more aerofoil-shaped blades arranged to enhance pitching action of the intake body in use.

In one embodiment, the blade is fixed to the connector.

In one embodiment, the intake further comprises a water pump and/or an air pump powered by an auxiliary source such as from electrical power or an engine.

In one aspect, the invention provides a wave energy converter comprising at least one wave energy conversion tube and an intake as defined above in any embodiment connected to a leading end of the tube.

In one embodiment, the converter comprises a plurality of tubes each having an intake, the tubes being arranged in couples joined at inlets, and trailing ends of the tubes also being in couples joined at ends, and there is a power take off at the combined trailing end.

In one embodiment, the converter further comprises a mechanism to move the intakes to change their orientation with respect to waves as viewed in plan.

In one embodiment, the converter further comprises a hose pump with an inlet, such that when the hose pump is stretched water inside squirts into the intake, said hose pump being part of the anchorage.

In on embodiment, the converter further comprises a conduit connected to the intake and having a pressurised air feedback link to an output stage of the converter to act as an air lift.

Furthermore, an example of a method, which does not form part of the present invention, provides a method of cleaning a tubular wave energy converter comprising the steps of sealing a first end, injecting high-salinity water into the second end, sealing the second end, leaving the high-salinity water in the tube for a sufficient period to kill off growth on the internal surface of the tube, and then opening the ends to release the high-salinity water and debris.

### DETAILED DESCRIPTION OF THE INVENTION

### Brief description of the Drawings

The invention will be more clearly understood from the following description of some embodiments thereof, given by way of example only with reference to the accompanying drawings in which:-
Fig. 1 is an underneath perspective view of an intake of the invention for a wave energy converter;
Figs. 2 to 4 are underneath plan, top perspective, and top plan views respectively of the intake;
Figs. 5 and 6 are diagrams illustrating how the intake moves and water enters the intake as a wave traverses it from left to right;
Fig. 7 is a plan view of an arrangement of multiple WECs;
Fig. 8 shows an alternative intake, in this case incorporating the addition of an "air lift" arrangement;
Fig. 9 shows a further intake, in this case incorporating the addition of a hose pump;
Fig. 10 is a diagrammatic cross-sectional side view of the intake, illustrating relative dimensions and angles for preferred embodiments;
Figs. 11 and 12 are diagrammatic cross-sectional front views showing different arrangements of buoyancy in further embodiments; and
Fig. 13 is a side view of an alternative frame for anchoring of the intake, the frame having an aerofoil shaped blade for improved pitching.

### Description of the Embodiments

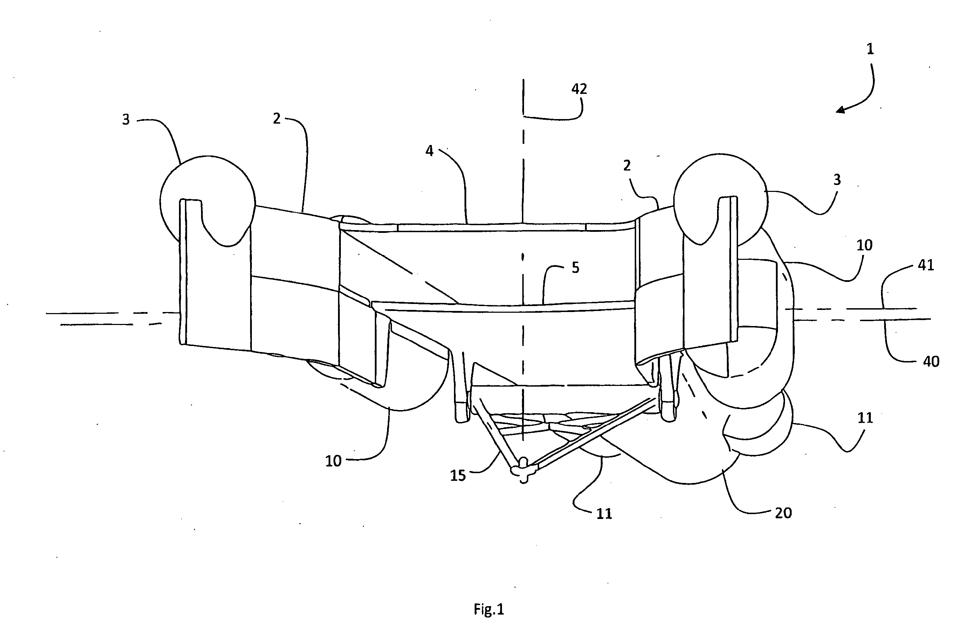

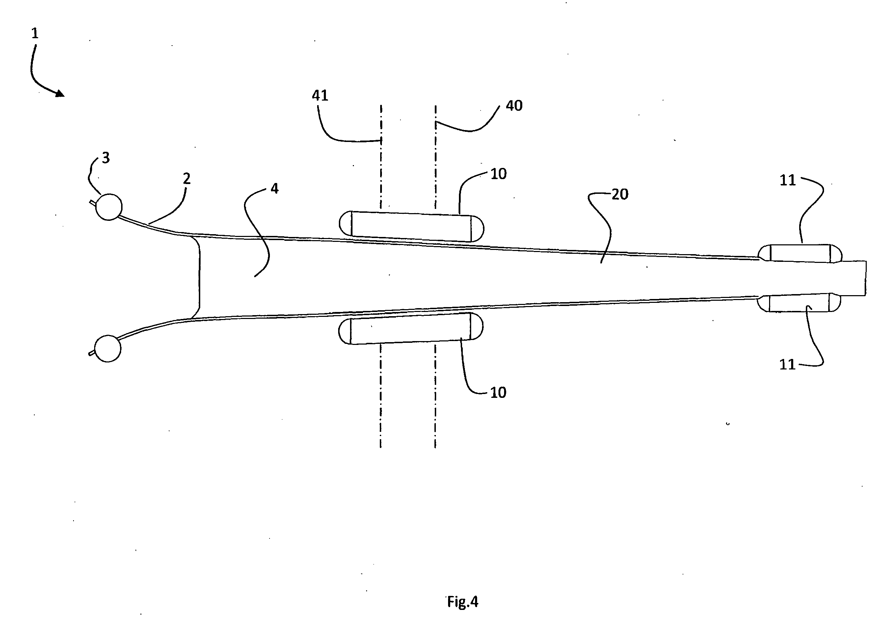

Referring to Figs. 1 to 7 a water intake 1 for a wave energy converter is illustrated. The intake 1 comprises a pair of splayed-out side guide walls 2 for funnelling water. Each wall 2 has a buoy 3 for stability at the front of the intake 1. A mouth is formed between a top wall 4 and a lower horizontal wall 5 which is recessed back. These walls extend back to be integral with a rigid gradually tapered rigid body 20 of glass fibre material (or steel, or any suitable sea-resistant material), which is in turn connected to a flexible tube of a wave energy converter (WEC), not shown. A pair of large buoys 10 are located close to a pivot axis of the intake 1, and there is a pair of rear stability buoys 11 at the rear.

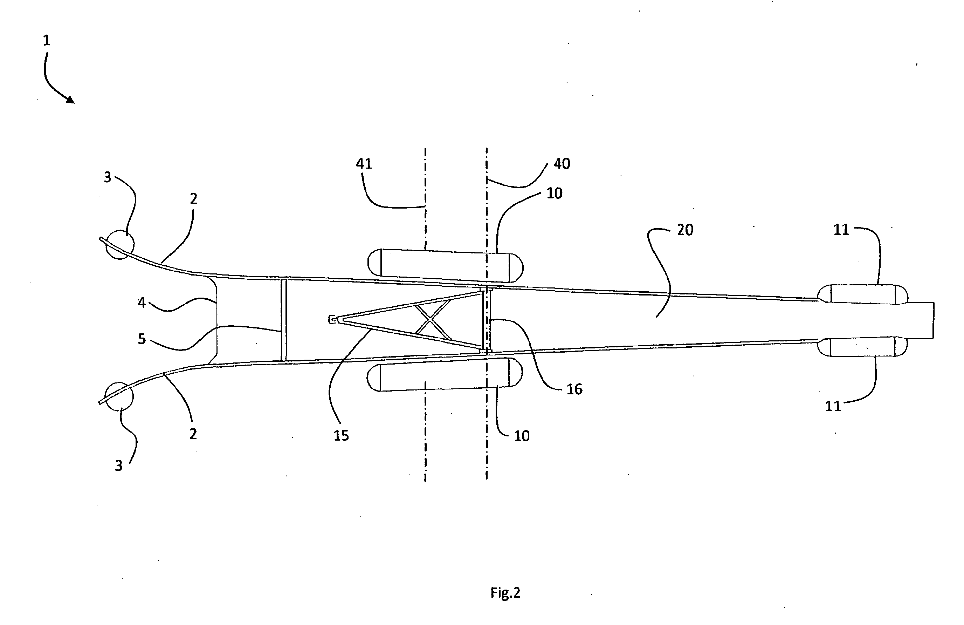

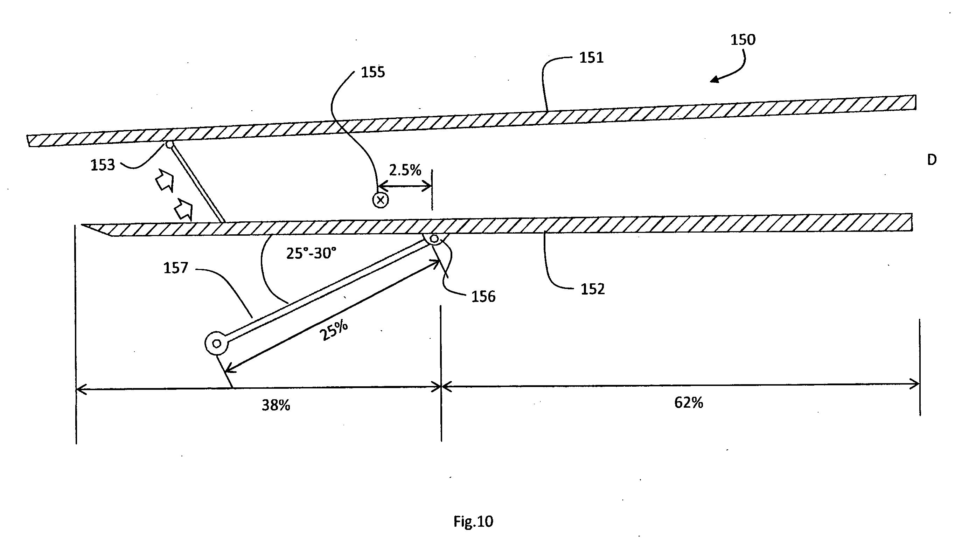

A triangular frame 15 is secured to the underneath of the intake body 20 and is for attachment to a mooring on the sea bed. The frame 15 is pivotally connected to the rigid tube 20 at a transverse pivot joint 16 to provide a pitching axis 40 for the body 20. This is best illustrated in Fig. 2. This drawing also illustrates a horizontal axis 41 through the centre of buoyancy, which axis is located forwardly of the pitching axis 40. These positions are important at achieving optimum pitching of the intake to maximise water kinetic energy at the intake. It has been found that water intake speeds of greater then 10m/s are achieved. Fig. 10, referred to below, gives some preferred relative dimensions for configuration of the intake to maximise the inflow kinetic energy.

The intake 1 operates by taking in water at the top of a wave only, which water has kinetic energy due to its circular motion. The anchoring and buoyancy of the intake 1 cause the intake 1 to tilt so that the water enters with optimum momentum and hence kinetic energy. Also, because of the tilt upwards at the mouth of the intake 1, potential energy of the water slug is availed of. This adds to the initial kinetic energy, causing the water slug to enter the flexible tube at a good starting speed. Pitching is combined with wave top skimming to maximise momentum. The wave 'cut' is best when done slightly advanced in the circular motion of the water at the top of the wave. The funnel shape also assists with turning the potential energy into kinetic energy. The body configuration is preferably a straight through shape without bends, as the latter would tend to impede the water flow. It is preferred that the lower wall of the intake bode be either straight or to have a convex bulge with a small curvature.

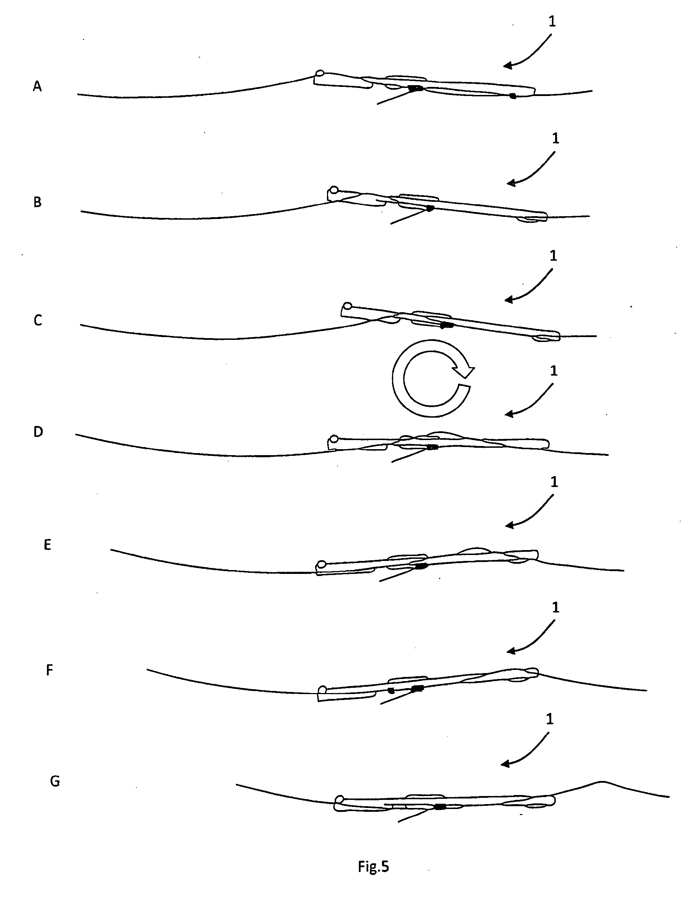

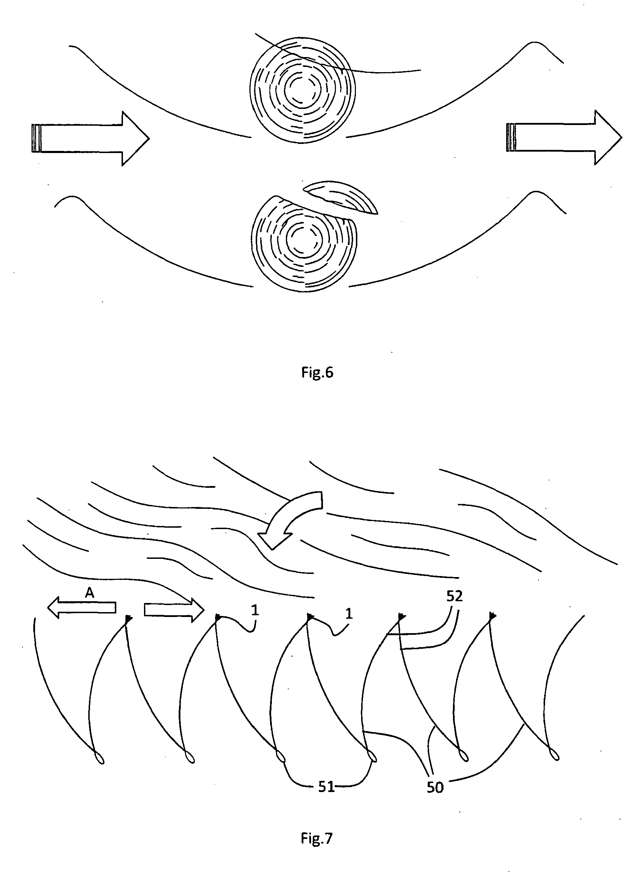

The following is the sequence of operation, as illustrated in Figs. 5 and 6.
- Stage A:: Wave approaches. Greater buoyancy at front of anchorage axis causes the intake 1 to be tilted up slightly at the front.
- Stages B & C:: Water from the top of the wave enters the mouth due to the circular motion of the water at the top of the wave. The water at the top of the wave is at a maximum velocity in the direction of wave travel. The intake 1 is at the optimum position to receive this water because of its buoyancy arrangement. The axis 40 through the pivot joint 16 is behind the axis 41 through the centre of buoyancy. Also, the main body of the wave urges the front of the intake 1 upwardly as it passes underneath. This causes the intake 1 to tilt upwardly at the front to a greater extent. This causes realisation of potential energy of the water which has entered the mouth. As shown in Fig. 6 there is a gradual pitching motion, giving a curved profile to the manner in which the top of the wave is "cut".
- Stages D & E:: The wave passes behind the anchorage axis 40 (where the A-frame 15 is pivotally connected to the body 20). However there is limited downward lilting or tilting at the front due to the extent of buoyancy at the front. The water slug runs out of the intake 1 and into the tube with a velocity approaching the tuned wave speed. It has been experimentally found that a water speed of about 85% to 90% of the wave speed works well.
- Stages F & G:: The wave passes and the intake 1 returns to its earlier position ready for a repeat water intake.

It will therefore be appreciated that the arrangement of buoyancy on the intake achieves optimum (not excessive) upward tilt at the front for realization of potential energy arising initially from kinetic energy through the intake 1 mouth, and quick return to an intake position.

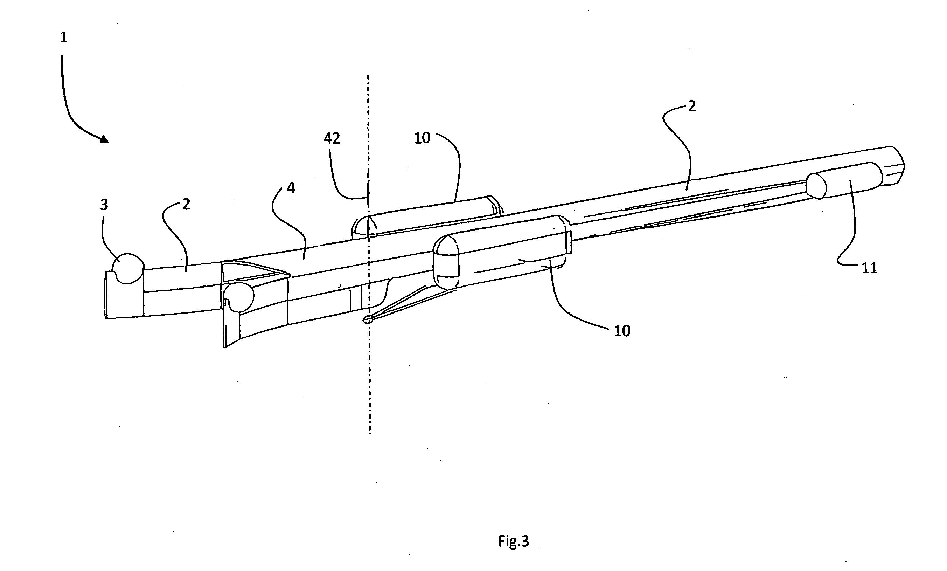

Because the intake 1 is anchored at the A-frame (at its apex) lateral swaying about a vertical axis 42 (Fig. 3) is minimized, while allowing free tilting motion about the pitching axis 40.

Referring to Fig. 7 an arrangement of multiple WECs 50 is shown. Each WEC 50 has a flexible tube 52 with an intake 1 at the front and a power plant 51 at the end. The anchorages at both the leading and trailing ends maintain a configuration as illustrated, in which two intakes 1 are side-by-side and two power plants 51 are also side-by-side. Each alternate tube 52 has a different orientation, thus ensuring that even with changes in wave direction, the direction of at least half of the intakes 1 will always be close to optimum.

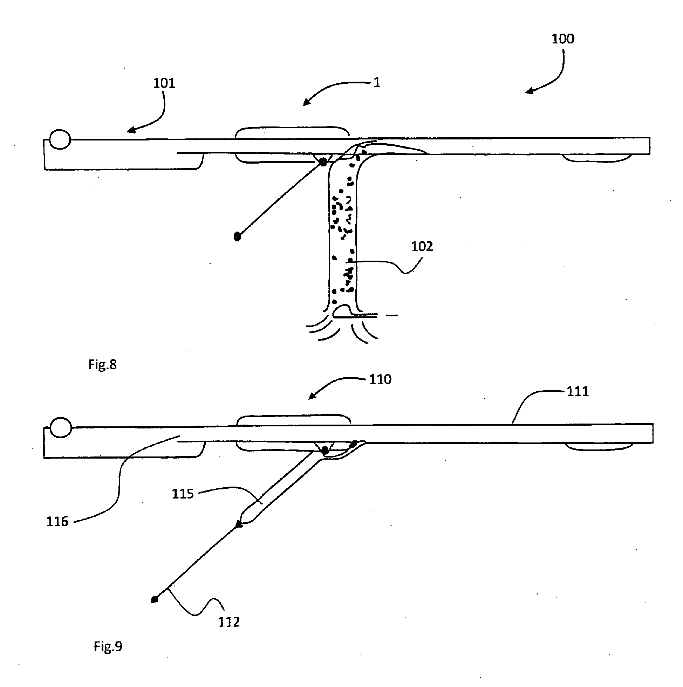

Referring to Fig. 8 an intake section 100 is similar to the intake 1, and there is also an air lift section 162. The latter receives feedback of pressurized air at a low level and the rising air bubbles draw water into the intake to supplement that introduced at the section 101. This greatly assists intake of air and water, reducing required complexity and variability in the intake.

In another embodiment, some of the power output of the WEC or from another source can be used to drive a pump to feed water into the intake body. There may also be an air blower arranged to pump air in to the intake body. Such arrangements provide an additional level of control, especially during periods of low wave energy. It is known in WEC technology in general to use auxiliary power to assist the overall system, such as in an oscillating water column.

Fig. 9 shows incorporation of a "Swedish" hose pump 115 in a WEC 110. The hose pump 115 is inserted between the intake 111 and the mooring 112. When the hose pump 115 is stretched the water inside it is compressed and pressurized and squirts at speed into the intake 111, thus adding to the amount of water and by Venturi action inducing additional velocity in all of the water. At the same time the hose pump 115 provides resilience to act as a shock absorber for the WEC, something which is particularly important in stormy conditions. The hose pump 115 has an inlet at it slower end and when tension is slack it draws water in through the inlet and when it is tensioned it pumps it up into the intake 111. This coincides with the wave cutting part of the cycle, and so the hose pump action is synchronized with the wave-cutting operation at the intake mouth 116.

Referring to Fig. 10 important relative dimensions are illustrated for preferred embodiments. In a rigid intake 150 there is a top wall 151 and a bottom wall 152. A flap 153 is shown near the mouth in this embodiment. The (virtual) centre of buoyancy is shown at 155, whereas the (real) pitching axis of anchorage is shown at 156. The mooring "A" frame 157 extends from the pivot axis 156. The preferred parameters are as follows:
- The axis 156 is located closer to the front than the back of the intake 150, preferably about 35 to 44% of the distance from the leading edge of the lower wall 152, and most preferably about 38%.
- The length of the mooring is chosen so that on average the angle of the mooring 157 to the lower wall 152 is in the range of 25° to 30°.
- The pivot axis 156 is about 1% to 4% of the length of the wall 152 behind the buoyancy axis 155, most preferably about 2.5%.

In this diagram we have illustrated a flap 153 which is pivoted from the top wall 151. This is not essential and does not impact on the above parameters. We believe from tests that such a flap will help to reduce blow-back of compressed air from the intake while not unduly interfering with the free passage of the water.

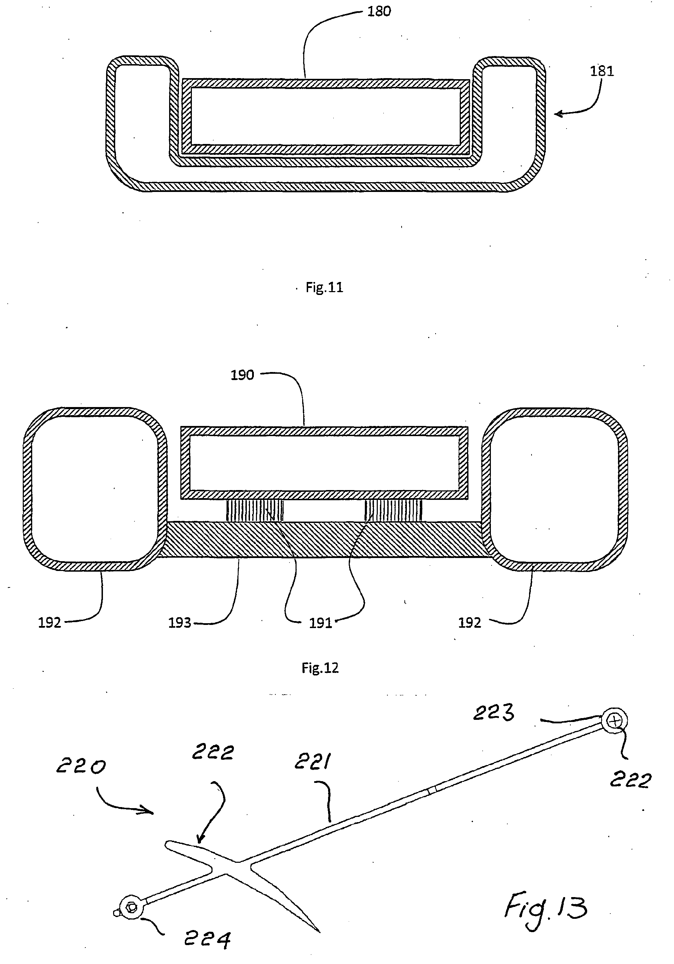

We have also found that it is beneficial to have a resilience or elasticity between the rigid intake body and the buoyancy. This provides an action of slight movement which increases output of water. As shown in Fig. 11 this may be achieved by mounting the intake body 180 on a flexible buoy 181 which supports the body underneath. Referring to Fig. 12, the body 190 may be mounted on resilient pads 191 on a rigid cross-member 193 extending laterally between rigid buoys 192 on each lateral side. These pads may be hollow and inflatable, thus giving both the elasticity as well as vertical adjustment which alters the air/water ratio.

Referring to Fig. 13 a frame 220 for an intake has a main frame body 221 with an aerofoil-shaped blade 222 towards its lower end. There are pivot joints 223 and 224 at the ends. The purpose of the frame 220 is as above, to link the body of the intake with an anchorage in which the connection is at a pivot joint having an axis which we call the pitching axis. In this case, in addition the blade 222 has the effect of causing increased pitching, in other words the front or mouth of the intake body rises more and imparts more kinetic energy as the body is at a steeper angle as the water enters and passes through.

In a further embodiment there may be a mechanism for vertical adjustment of the relative heights of the body and the buoyancy, to adjust the air:water ratio. We have found that the latter is preferably approximately 60% water: 40% air by volume at the intake mouth. The configuration of the intakes illustrated and the parameters given above help to achieve this ratio.

In various embodiments the WEC water intake is preferably shaped like a funnel along its length. Its mouth is rectangular and the walls are profiled to reduce in cross-sectional area along the length and to change shape to substantially circular at the end where it engages a tube. The rectangular cross-section at the front is wide. In a preferred embodiment the width is approximately 3D where D is the tube bore, and has a height of approximately 0.6D. More generally, it is preferred that the width be in the range of 2.0D to 4.5D and that the height be in the range of 0.45D-0.7D.

To avoid kinking of the tube near where it joins the rigid intake body and to achieve a smoother action the thickness of the tube is built up close to the rigid intake. There is a gradual transition from the rigid intake to the flexible tube. This can be achieved by building up extra layers of rubber in the tube near where it joins the rigid intake. Alternatively, or in addition, the final 15% or so of the intake may be of a non-rigid material.

Furthermore, an example of a method of cleaning inside a tubular WEC without impacting on the environment has been provided. In the method, one end of the tube is sealed by, for example inserting and inflating a balloon. Water with a very high salinity is injected into the other end and that end is then sealed. The high-salinity water will kill off any crustaceons or seaweed which has attached itself to the inner surfaces of the tubes. When the cleaning water is released into the sea there is no pollution as chemicals have not been used.

The invention is not limited to the embodiments described but may be varied in construction and detail. The intake may be applied to a WEC of another type, such as an impulse turbine or other device connected instead of the main tube. Also, the intake may have, instead of a rigid frame, two fixtures for connection to anchor ropes. There would be one fixture on each side. Further, there may be one or more complex shaped buoys rather than one discrete buoy on each side at the locations. Also, in other embodiments there may be a number of interconnected intakes, for example for a number of parallel WEC tubes. Also, one or more of the walls forming the mouth of the intake could be shaped, but the bottom wall is preferably horizontal. The bottom wall needs to form what is effectively a knife edge as it cuts (the top off) the wave. Also, the intake could alternatively be of any other suitable material such as corrosion-resistant steel.

While in the embodiments described above there is a solid "A" frame, alternative arrangements are possible such as ropes or chains making the A shape. Advantageously, the connection to the anchor should be to both sides rather than the middle. Thus, if the intake body starts to sway sideways or to rotate about the vertical axis 42 a restoring force from the tension in one or other rope tends to bring the intake back in line with anchoring line.

Also, referring again to Fig. 7 showing the array of interlinked tubes, in another embodiment all of the ends can be moved as indicated by the arrows A (left or right on the page) to maintain a good orientation to the oncoming waves over say +/- 20° from mid point. Thus, while all of the electrical connections are fixedly moored in place, the feed ends could be moored so that a control motor and winder would move the array of inlets over a limited range to optimize energy collection. So, with the array in a mean position with the tubes facing West into the oncoming waves coming from the West, half the tubes are pointing say 15° South of West and half are 15° North of West, giving a 30° angle between them. Then, the wave direction changes over time, so they are coming from South of West, rather than West. Then, using a system such as a winch system all of the intakes are winched southwards, while leaving the turbines/generators in place, so that the array again meets the oncoming waves face on.

The tubes of a WEC incorporating any intake above or with a different intake may be manufactured *in situ* either on a ship or at the shore by extrusion. This would avoid need for transport on land or sea. Also, while the frame may be rigid, steel or polyproplene cables could alternatively be employed for example.

## Claims

1. An air and water intake (1) for a wave energy converter, the intake comprising:
a substantially rigid hollow body (20) having a mouth for receiving water from the upper parts of the waves and air, and an outlet for delivering the water and air to a wave energy converter; and
buoyancy means (10) providing buoyancy to the body and being adapted to cause the intake to:
receive into the mouth skimmed-off water from near the top of a wave, and
tilt so that said water flows downwardly within the body, gaining velocity; and and wherein the intake comprises a connector (15) on an underside of the body for connection to an anchor for pitching of the intake body about a pitching axis,
wherein the pitching axis (40) and a lateral centre of buoyancy axis (41) are arranged such that water primarily from the top of a wave and slightly forwardly of a wave crest is received, and
wherein the buoyancy is arranged such that said centre of buoyancy axis of the intake is forwardly of the pitching axis.

2. An air and water intake as claimed in claim 1, wherein the distance between the centre of buoyancy axis (41) and the pitching axis (40) is in the range of 1% to 4% of the length of the body lower wall, the centre of buoyancy axis being forward of the pitching axis.

3. An air and water intake as claimed in claims 1 or 2, wherein the pitching axis (40) is located at a distance in the range of 35% to 45% and preferably about 38% of the length of a lower wall of the body from a leading edge of said lower wall (5).

4. An air and water intake as claimed in any preceding claim, wherein the body is connected to the buoyancy (192) by a resilient coupling (191), and wherein the intake comprises an adjustment mechanism to adjust mutual height of the body and the buoyancy.

5. An air and water intake as claimed in any preceding claim, wherein the connector comprises a frame (15) for connection to an anchor, and wherein the frame is connected to the body about a transverse pivot joint (16) to prevent rotation about a longitudinal axis.

6. An air and water intake as claimed in any preceding claim, comprising stabilising buoyancy at the rear (11) and adapted to follow the water surface and maintain the tube at approximately water level in operation.

7. An air and water intake as claimed in any preceding claim, wherein the mouth is defined by top (4) and bottom (5) walls, the bottom wall being adapted to cut through a wave top, wherein the walls are substantially planar near the mouth, and wherein the bottom wall (5) leading edge is recessed back with respect to leading edge of the top wall.

8. An air and water intake as claimed in any preceding claim, further comprising a flap hinged (153) about a horizontal axis from a top wall of the body, and arranged to prevent blowback of pressured air in the body.

9. An air and water intake as claimed in any preceding claim, further comprising one or more aerofoil-shaped blades (222) arranged to enhance pitching action of the intake body in use.

10. An air and water intake as claimed in claim 9, wherein the blade (222) is fixed to the connector (220).

11. An air and water intake as claimed in any preceding claim, further comprising a water pump and/or an air pump powered by an auxiliary source such as from electrical power or an engine.

12. A wave energy converter comprising at least one wave energy conversion tube (52), an anchorage, and an intake as claimed in any preceding claim connected to a leading end of the tube.

13. A wave energy converter as claimed in claim 12 comprising a plurality of tubes (52) each having an intake, the tubes being arranged in couples joined at inlets, and trailing ends of the tubes also being in couples joined at ends, and there is a power take off at the combined trailing end.

14. A wave energy converter as claimed in claims 12 or 13, further comprising a hose pump (115) with an inlet, such that when the hose pump is stretched water inside squirts into the intake, said hose pump being part of the anchorage.

15. A wave energy converter as claimed in claims 12 to 14, further comprising a conduit (102) connected to the intake and having a pressurised air feedback link to an output stage of the converter to act as an air lift.

## Patentansprüche

1. Luft- und Wassereinlass (1) für einen Wellenenergiewandler, wobei der Einlass Folgendes umfasst:
einen im Wesentlichen starren hohlen Körper (20) mit einer Öffnung zum Aufnehmen von Wasser von den oberen Teilen der Wellen und Luft, und einem Auslass zum Zuführen des Wassers und der Luft zu einem Wellenenergiewandler; und
Auftriebsmittel (10), die den Körper mit Auftrieb versehen und dazu angepasst sind, den Einlass zu Folgendem zu veranlassen:
Aufnehmen von abgeschöpftem Wasser von nah beim obersten Teil der Wellen in die Öffnung, und
Kippen, so dass das Wasser in dem Körper nach unten fließt und an Geschwindigkeit gewinnt; und
wobei der Einlass einen Verbinder (15) an einer Unterseite des Körpers für die Verbindung mit einem Anker zum Nicken des Einlasskörpers um eine Nickachse umfasst,
wobei die Nickachse (40) und eine laterale Mitte der Auftriebsachse (41) derart angeordnet sind, dass Wasser von vorwiegend dem obersten Teil einer Welle und geringfügig vor einem Wellenkamm aufgenommen wird, und
wobei der Auftrieb derart angeordnet ist, das die Mitte der Auftriebsachse des Einlasses vor der Nickachse liegt.

2. Luft- und Wassereinlass nach Anspruch 1, wobei der Abstand zwischen der Mitte der Auftriebsachse (41) und der Nickachse (40) im Bereich von 1 % bis 4% der Länge der unteren Wand des Körpers beträgt, wobei die Mitte der Auftriebsachse vor der Nickachse liegt.

3. Luft- und Wassereinlass nach Anspruch 1 oder 2, wobei die Nickachse (40) in einem Abstand im Bereich 35% bis 45% und bevorzugt ungefähr 38% der Länge einer unteren Wand des Körpers von einem vorderen Rand der unteren Wand (5) liegt.

4. Luft- und Wassereinlass nach einem der vorangehenden Ansprüche, wobei der Körper durch eine elastische Kupplung (191) mit dem Auftrieb (192) verbunden ist und wobei der Einlass einen Verstellmechanismus umfasst, um die gegenseitige Höhe des Körpers und des Auftriebs zu verstellen.

5. Luft- und Wassereinlass nach einem der vorangehenden Ansprüche, wobei der Verbinder einen Rahmen (15) für die Verbindung mit einem Anker umfasst und wobei der Rahmen um ein Querdrehgelenk (16) mit dem Körper verbunden ist, um die Drehung um eine Längsachse zu verhindern.

6. Luft- und Wassereinlass nach einem der vorangehenden Ansprüche, der stabilisierenden Auftrieb am hinteren Ende (11) umfasst und dazu angepasst ist, der Wasseroberfläche zu folgen und die Röhre in Betrieb auf ungefähr Wasserhöhe zu halten.

7. Luft- und Wassereinlass nach einem der vorangehenden Ansprüche, wobei die Öffnung von einer oberen Wand (4) und einer unteren Wand (5) definiert ist, wobei die untere Wand dazu angepasst ist, durch den obersten Teil einer Welle zu schneiden, wobei die Wände in der Nähe der Öffnung im Wesentlichen eben sind und wobei der vordere Rand der unteren Wand (5) in Bezug auf den vorderen Rand der oberen Wand zurückgesetzt ist.

8. Luft- und Wassereinlass nach einem der vorangehenden Ansprüche, weiter umfassend eine Klappe, die gelenkig (153) um eine horizontale Achse an einer oberen Wand des Körpers angebracht ist und dazu angeordnet ist, Rückstöße von Druckluft in dem Körper zu verhindern.

9. Luft- und Wassereinlass nach einem der vorangehenden Ansprüche, weiter umfassend eine oder mehrere tragflächenförmige Blätter (222), die dazu angeordnet sind, die Nickwirkung des Einlasskörpers im Einsatz zu verstärken.

10. Luft- und Wassereinlass nach Anspruch 9, wobei das Blatt (222) an dem Verbinder (220) befestigt ist.

11. Luft- und Wassereinlass nach einem der vorangehenden Ansprüche, weiter umfassend eine Wasserpumpe und/oder eine Luftpumpe, die von einer Hilfsquelle, wie etwa von elektrischer Leistung oder einem Motor angetrieben wird/werden.

12. Wellenenergiewandler, umfassend mindestens eine Wellenenergiewandlerröhre (52), eine Verankerung und einen Einlass nach einem der vorangehenden Ansprüche, der mit einem vorderen End der Röhre verbunden ist.

13. Wellenenergiewandler nach Anspruch 12, umfassend mehrere Röhren (52) mit jeweils einem Einlass, wobei die Röhren in an Einlässen verbundenen Paaren angeordnet sind und hintere Enden der Röhren ebenfalls in an Enden verbundenen Paaren sind und wobei sich am kombinierten hinteren Ende eine Leistungsabnahme befindet.

14. Wellenenergiewandler nach Ansprüchen 12 oder 13, weiter umfassend eine Schlauchpumpe (115) mit einem Einlauf, so dass, wenn die Schlauchpumpe gedehnt wird, Wasser darin in den Einlass spritzt, wobei die Schlauchpumpe Teil der Verankerung ist.

15. Wellenenergiewandler nach Ansprüchen 12 bis 14, weiter umfassend eine Leitung (102), die mit dem Einlass verbunden ist und eine Druckluft-Rückspeisungsverbindung zu einer Ausgabestufe des Wandlers aufweist, um als Luftheber zu wirken.

## Revendications

1. Prise d'air et d'eau (1) pour un convertisseur d'énergie des vagues, la prise comportant :
un corps creux sensiblement rigide (20) ayant une embouchure permettant de recevoir de l'eau en provenance des parties supérieures des vagues et de l'air, et une sortie permettant d'acheminer l'eau et l'air jusqu'à un convertisseur d'énergie des vagues ; et
un moyen de flottabilité (10) apportant une flottabilité au corps et étant adapté pour amener la prise à :
recevoir dans l'embouchure l'eau prélevée en provenance d'une partie proche de la partie supérieure d'une vague, et
s'incliner de telle sorte que ladite eau s'écoule vers le bas à l'intérieur du corps, gagnant en vitesse ; et
dans laquelle la prise comporte un connecteur (15) sur une partie inférieure du corps à des fins de connexion à une ancre à des fins de tangage du corps de prise autour d'un axe de tangage,
dans laquelle l'axe de tangage (40) et un centre latéral de l'axe de flottabilité (41) sont arrangés de telle manière que l'eau principalement en provenance de la partie supérieure d'une vague et légèrement en avant par rapport à une crête de vague est reçue, et
dans laquelle le moyen de flottabilité est arrangé de telle manière que ledit centre de l'axe de flottabilité de la prise est en avant par rapport à l'axe de tangage.

2. Prise d'air et d'eau selon la revendication 1, dans laquelle la distance entre le centre de l'axe de flottabilité (41) et l'axe de tangage (40) est de l'ordre de 1 % à 4 % de la longueur de la paroi inférieure du corps, le centre de l'axe de flottabilité étant en avant par rapport à l'axe de tangage.

3. Prise d'air et d'eau selon la revendication 1 ou la revendication 2, dans laquelle l'axe de tangage (40) est situé à une distance de l'ordre de 35 % à 45 % et de préférence environ 38% de la longueur d'une paroi inférieure du corps depuis un bord d'attaque de ladite paroi inférieure (5).

4. Prise d'air et d'eau selon l'une quelconque des revendications précédentes, dans laquelle le corps est connecté au niveau du moyen de flottabilité (192) par un accouplement élastique (191), et dans laquelle la prise comporte un mécanisme d'ajustement pour ajuster la hauteur mutuelle du corps et du moyen de flottabilité.

5. Prise d'air et d'eau selon l'une quelconque des revendications précédentes, dans laquelle le connecteur comporte un cadre (15) à des fins de connexion à une ancre, et dans laquelle le cadre est connecté au niveau du corps autour d'une articulation pivotante transversale (16) permettant d'empêcher toute rotation autour d'un axe longitudinal.

6. Prise d'air et d'eau selon l'une quelconque des revendications précédentes, comportant un moyen de flottabilité stabilisant au niveau de l'arrière (11) et adapté pour suivre la surface de l'eau et maintenir le tube approximativement au niveau de l'eau en cours de fonctionnement.

7. Prise d'air et d'eau selon l'une quelconque des revendications précédentes, dans laquelle l'embouchure est définie par la paroi supérieure (4) et la paroi inférieure (5), la paroi inférieure étant adaptée pour venir couper une partie supérieure d'une vague, dans laquelle les parois sont sensiblement planes à proximité de l'embouchure, et dans laquelle le bord d'attaque de la paroi inférieure (5) est en retrait par rapport au bord d'attaque de la paroi supérieure.

8. Prise d'air et d'eau selon l'une quelconque des revendications précédentes, comportant par ailleurs un volet (153) articulé autour d'un axe horizontal depuis une paroi supérieure du corps, et arrangé pour empêcher tout refoulement d'air sous pression dans le corps.

9. Prise d'air et d'eau selon l'une quelconque des revendications précédentes, comportant par ailleurs une ou plusieurs pales à profil aérodynamique (222) arrangées à des fins de perfectionnement de l'action de tangage du corps de prise lors de l'utilisation.

10. Prise d'air et d'eau selon la revendication 9, dans laquelle la pale (222) est fixée sur le connecteur (220).

11. Prise d'air et d'eau selon l'une quelconque des revendications précédentes, comportant par ailleurs une pompe à eau et/ou une pompe à air qu'alimente une source auxiliaire comme en provenance d'une alimentation électrique ou d'un moteur.

12. Convertisseur d'énergie des vagues comportant au moins un tube de conversion d'énergie des vagues (52), un ancrage, et une prise selon l'une quelconque des revendications précédentes connectée à une extrémité d'attaque du tube.

13. Convertisseur d'énergie des vagues selon la revendication 12, comportant une pluralité de tubes (52) ayant chacun une prise, les tubes étant arrangés en paires reliées au niveau des entrées, et des extrémités arrière des tubes étant également en paires reliées au niveau des extrémités, et il y a une prise de force au niveau de l'extrémité arrière combinée.

14. Convertisseur d'énergie des vagues selon la revendication 12 ou la revendication 13, comportant par ailleurs une pompe à tuyau (115) avec une entrée, de telle manière que, quand la pompe à tuyau est étendue, l'eau à l'intérieur jaillit dans la prise, ladite pompe à tuyau faisant partie de l'ancrage.

15. Convertisseur d'énergie des vagues selon l'une quelconque des revendications 12 à 14, comportant par ailleurs un conduit (102) connecté à la prise et ayant une liaison de retour d'air sous pression au niveau d'un étage de sortie du convertisseur pour servir d'émulsion d'air.
